# EUROPEAN PATENT SPECIFICATION

(11) **EP 3 219 619 B1**
(45) Date of publication and mention of the grant of the patent: **12.12.2018**
(21) Application number: 17161111.4
(22) Date of filing: 15.03.2017
(51) Int. Cl.: B64D 13/06

(54) **PACK-AND-A-HALF ARCHITECTURE FOR ENVIRONMENTAL CONTROL SYSTEMS**
PACK-AND-A-HALF-ARCHITEKTUR FÜR UMWELTKONTROLLSYSTEME
ARCHITECTURE PAQUET ET DEMI POUR SYSTÈMES DE RÉGULATION DE L'ENVIRONNEMENT

(30) Priority: 16.03.2016 US 201662309081 P
(43) Date of publication of application: 20.09.2017
(73) Proprietor: Hamilton Sundstrand Corporation, Windsor Locks, CT 06096-1010 (US)
(72) Inventor: ARMY, Donald E., Enfield, CT Connecticut 06082 (US); PEACOS III, Frederick, North Scituate, RI Rhode Island 02857 (US)
(74) Representative: Dehns

(56) References cited:
- EP-A1- 2 845 803
- EP-A1- 2 937 287
- US-A- 5 704 218

## Description

### BACKGROUND

The subject matter disclosed herein generally relates to environmental control systems and, more particularly, to pack-and-a-half architectures for environmental control systems.

Commercial aircraft are conventionally equipped with two-pack environmental control system architectures that include redundant packs installed in separate bays beneath a center wing box of the aircraft and are encapsulated by the aircraft wing-to-body fairing. These bays are commonly separated by a Keel Beam that supports the weight of the aircraft in the event of a wheels-up landing. Local penetrations of the keel beam can be accommodated if properly reinforced.

Smaller configurations of environmental control system architectures can include pack-and-a-half architectures that fit within a single volume. However, such volume is larger than half of the convention two-pack architectures, and thus the pack-and-a-half architecture systems may be too large for use in such locations, and thus may be required to be installed in other locations of the aircraft (e.g., in a tail cone of the aircraft). It may be beneficial to further reduce the size of pack-and-a-half environmental control system architectures. EP 2937287 A1 and EP 2845803 A1 describe environmental control systems.

### SUMMARY

The invention provides an environmental control systems as descrided in claim 1.

Optional features of the invention are mentioned in the dependent claims 2-12.

Technical effects of embodiments of the present disclosure include environmental control systems having pack-and-a-half architectures.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1A;
FIG. 2A is a schematic, perspective illustration of an environmental control system of an aircraft that can incorporate embodiments of the present disclosure;
FIG. 2B is a second perspective illustration of the environmental control system of FIG. 2A;
FIG. 3 is a schematic diagram of an environmental control system in accordance with an embodiment of the present disclosure;
FIG. 4A is a schematic diagram of an environmental control system architecture in accordance with an embodiment of the present disclosure;
FIG. 4B is a schematic diagram illustrating an airflow through the environmental control system of FIG. 4A when an aircraft is on the ground;
FIG. 4C is a schematic diagram illustrating an airflow through the environmental control system of FIG. 4A when an aircraft is in flight;
FIG. 5A is a schematic diagram of an environmental control system architecture in accordance with another embodiment of the present disclosure;
FIG. 5B is a schematic diagram illustrating an airflow through the environmental control system of FIG. 5A when an aircraft is on the ground; and
FIG. 5C is a schematic diagram illustrating an airflow through the environmental control system of FIG. 5A when an aircraft is in flight.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "##" that is shown in FIG. X may be labeled "X##" and a similar feature in FIG. Z may be labeled "Z##." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

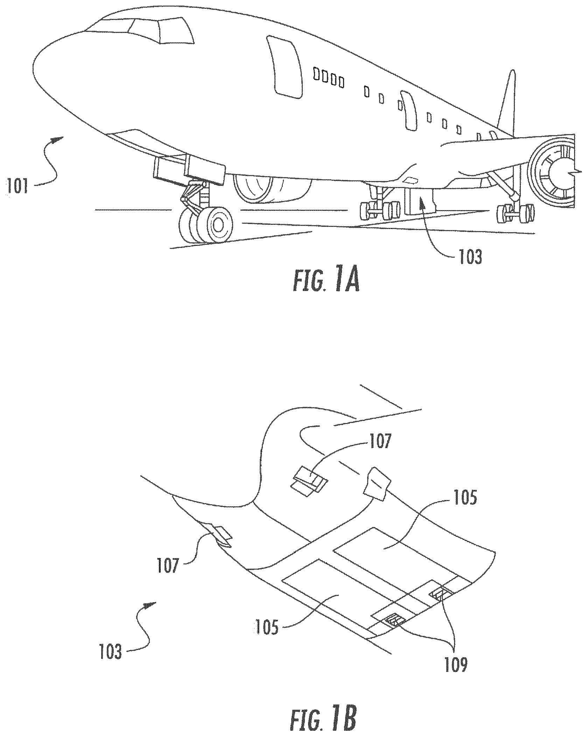

As shown in FIGS. 1A-1B, an aircraft 101 can include one or more bays 103 beneath a center wing box. The bay 103 can contain and/or support one or more components of the aircraft 101. For example, in some configurations, the aircraft 101 can include environmental control systems within the bay 103. As shown in FIG. 1B, the bay 103 includes bay doors 105 that enable installation and access to one or more components (e.g., environmental control systems). During operation of environmental control systems, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, etc.). Some air may be exhaust through one or more ram air exhaust outlets 109.

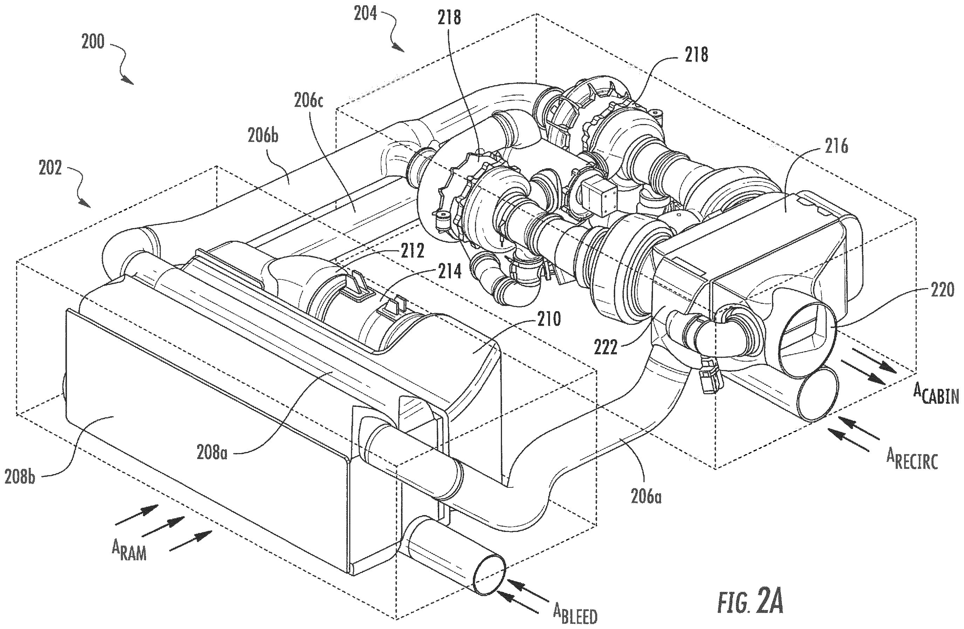

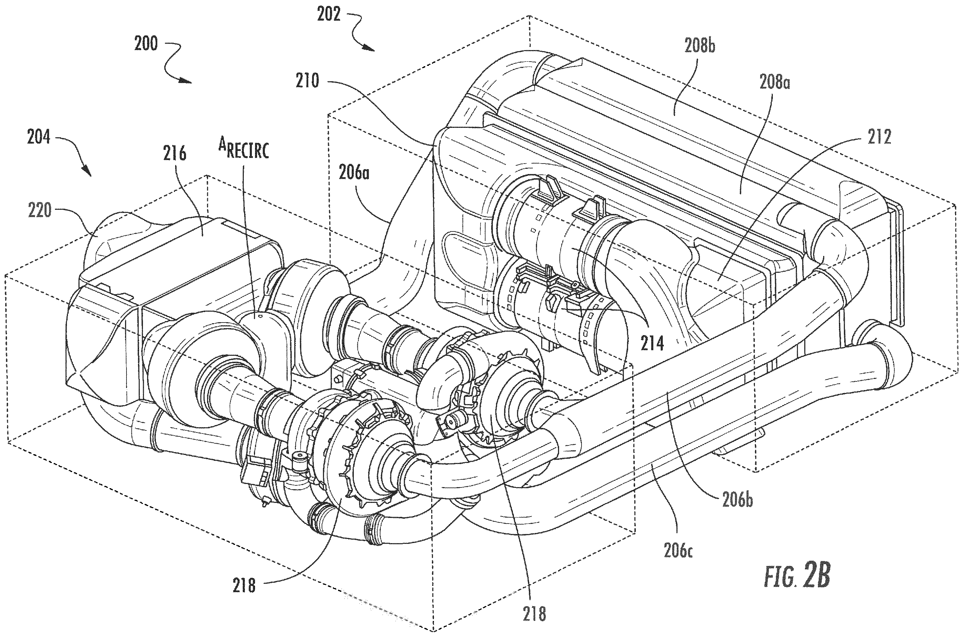

Turning now to FIGS. 2A-2B, an environmental control system 200 in accordance with an embodiment of the present disclosure is shown. The environmental control system 200 includes a ram module 202 and a refrigeration module 204 that are operably connected by one or more ducts 206a, 206b, 206c. FIG. 2A shows a first perspective illustration of the environmental control system 200 and FIG. 2B shows a second perspective illustration of the environmental control system 200. The environmental control system 200 of FIGS. 2A-2B is merely for illustrative and explanatory purposes, and those of skill in the art will appreciate that various embodiments of the present disclosure can be configured with different types of environmental control systems and/or different configurations of environmental control systems, and thus, the present discussion and associated illustrations are not intended to be limiting.

As shown, in FIGS. 2A-2B, the ram module 202 includes a primary heat exchanger 208a and a secondary heat exchanger 208b that form a two-pass heat exchanger module. The heat exchangers 208a, 208b are configured to receive ram air Aᵣₐₘ and bleed air A_{bleed} to condition air within the ram module 202. The ram module 202 further includes a ram outlet header 210 and a ram exhaust header 212. Located between the headers 210, 212 may be one or more ram fans 214. Air from the ram module 202 can be conveyed to or from the refrigeration module 204 through the ducts 206a, 206b, 206c.

The refrigeration module 204 includes a condenser heat exchanger 216 and one or more air cycle machines 218. The condenser heat exchanger 216 can be operably connected to the secondary heat exchanger 208b by a first duct 206a that can supply hot air to the condenser heat exchanger 216. The air cycle machines 218 can be connected to one or both of the heat exchangers 208a, 208b, as shown. Recirculated air A_{recirc} can be supplied to and mix with turbine air from the air cycle machines 218 as indicated in FIG. 2A.

The condenser heat exchanger 216 is configured to condition air and supply relatively cool or cold air A_{cabin} to a cabin of an aircraft. Thus, the condenser heat exchanger 216 includes an outlet header 220. The hot air that is supplied to the condenser heat exchanger 216 through the duct 206a is fed into an inlet header 222 of the condenser heat exchanger 216.

As shown in FIGS. 2A-2B, the ram fans 214 and the air cycle machines 218 are separated. Such a configuration enables the separation of the environmental control system 200 to be separated into the ram module 202 and the refrigeration module 204. As shown, the ram module 202 includes the ram fans 214. In some embodiments, the ram fans 214 can be configured as dual electric ram rams that can provide a required ram cooling performance and redundancy. The ram fans 214 can be operated separately or at the same time to enable control and variance in ram flow. Fixed speed fans, two speed fans, or variable speed fans can be used without departing from the scope of the present disclosure. Accordingly, the environmental control system 200 can be installed into two separate volumes on an aircraft (e.g., in two separate bays) as compared to a single large volume.

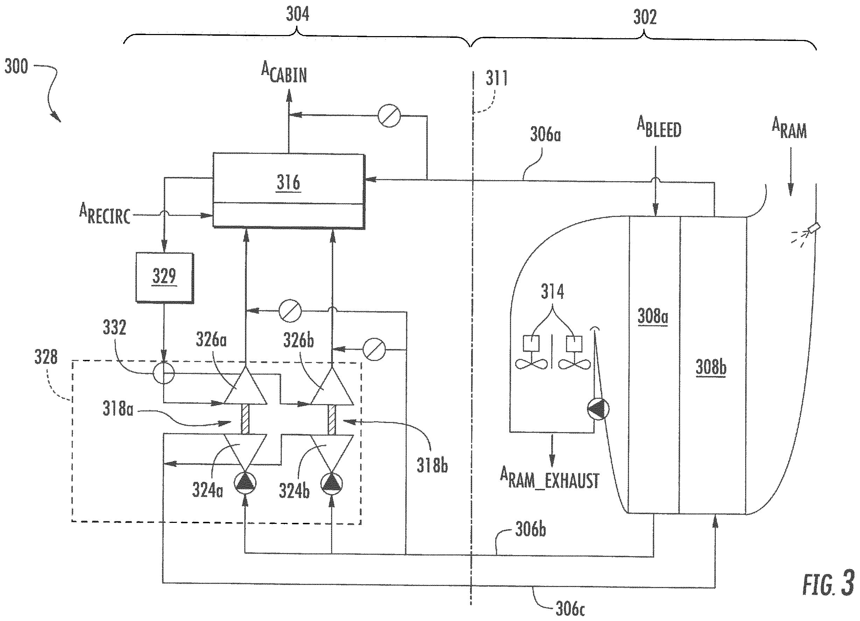

For example, turning now to FIG. 3, a schematic diagram of an environmental control system 300 in accordance with an embodiment of the present disclosure is shown. The environmental control system 300 may be similar to that shown and described in FIGS. 2A-2B, and thus like features will not be described again.

The environmental control system 300 includes a ram module 302 and a refrigeration module 304. In some configurations, when installed on an aircraft, the ram module 302 can be installed into a right-hand side of the aircraft, and thus through a first bay door and the refrigeration module 304 can be installed into a lefthand side of the aircraft, and through a second bay door. In FIG. 3, an aircraft centerline 311 is indicated as separating the ram module 302 from the refrigeration module 304.

The ram module 302 is operably connected to the refrigeration module 304 by one or more ducts 306. The environmental control system 300 includes a primary heat exchanger 308a and a secondary heat exchanger 308b that receive bleed air A_{bleed} and ram air Aᵣₐₘ, respectively, to condition air within the ram module 302. One or more ram fans 314 are configured to aid in exhausting ram exhaust air A_{ram_exhaust} from the ram module 302.

As shown, the refrigeration module 304 includes a condenser heat exchanger 316 and tandem air cycle machines 318a, 318b. Each of the tandem air cycle machines 318a, 318b includes a respective compressor 324a, 324b and a respective turbine 326a, 326b. The tandem air cycle machines 318a, 318b can form a tandem air cycle machine module 328, as indicated by the dashed-line box in FIG. 3. The tandem air cycle machine module 328 can include two air cycle machines (e.g., 318a, 318b) that are operably connected to a centralized manifold, as described herein, and thus form a compact, unitized assembly. Although shown and described herein with two air cycle machines 318a, 318b, those of skill in the art will appreciate that embodiments of the present disclosure can be applied to two, three, or four wheel tandem air cycle machines. As shown, a water collector 329 is configured to extract moisture from air of the condenser 316 and supply the conditioned air to the air cycle machines 318a, 318b. An air cycle machine isolation valve 332 is schematically shown that is configured to be operated and control fluid flow into one or both of the air cycle machines 318a, 318b.

Embodiments provided herein are directed to improved pack-and-a-half environmental control systems. Architectures as provided herein can enable an integrated low pressure system that offers improved economic and operational performance superior to other architectures. Moreover, embodiments provided enable reduced system part count, weight, and interfaces that can be realized over conventional two-pack architectures. For example, in various embodiments, architectures provided herein may require only one instead of two of the following components: ram heat exchangers; condensing heat exchangers; water collectors; air cycle machine isolation valves; or ram circuits.

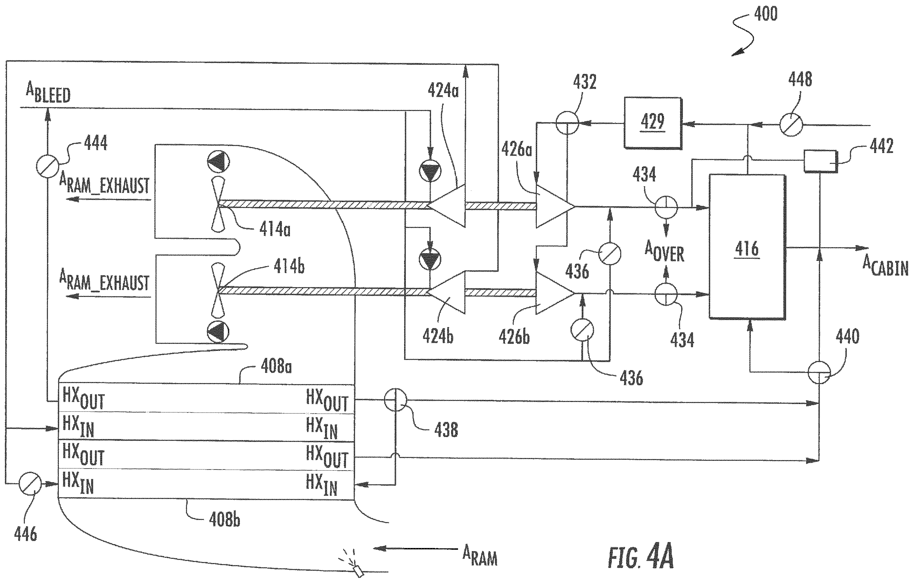

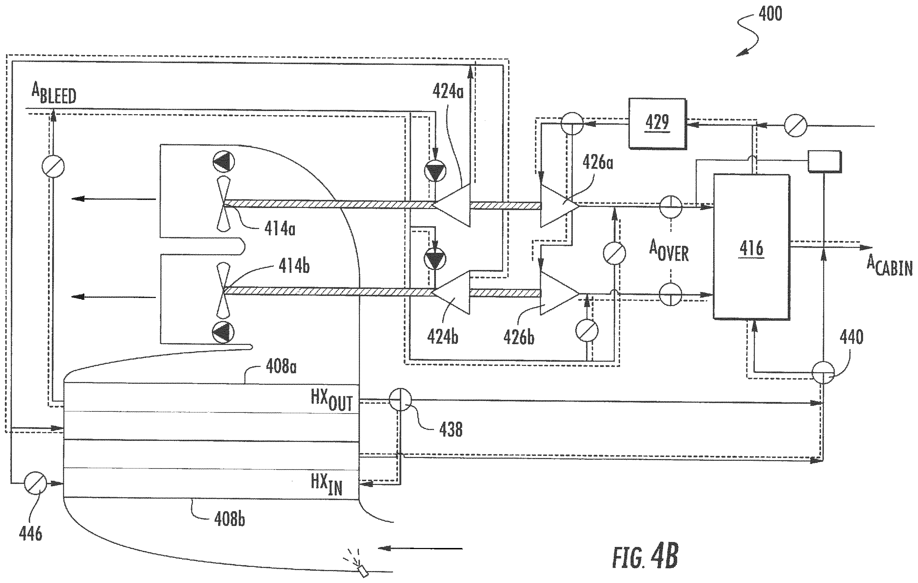

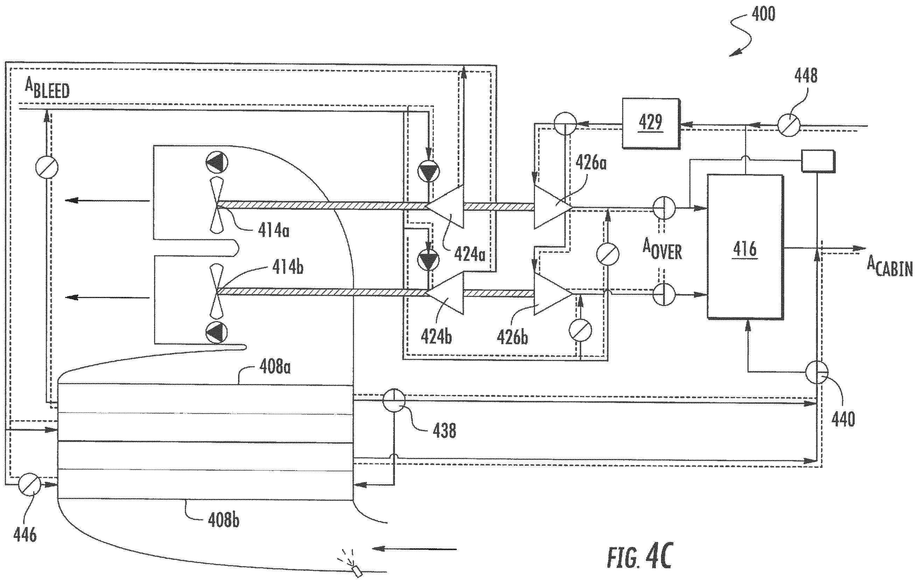

Turning to FIGS. 4A-4C, schematic diagrams of a pack-and-a-half environmental control system 400 in accordance with an embodiment of the present disclosure are shown. FIG. 4A illustrates the components of the environmental control system 400, FIG. 4B illustrates a ground operation of the environmental control system 400, and FIG. 4C illustrates a cruise operation of the environmental control system 400. The dashed lines in FIGS. 4B-4C illustrate flow paths of air as it flows through the environmental control system 400 in the various operational conditions.

The environmental control system 400 can be configured similar to that shown in FIGS. 2A-2B, and includes a first heat exchanger 408a, a second heat exchanger 408b, a water collector 429, a condenser heat exchanger 416, and air cycle machines having ram fans 414a, 414b, compressors 424a, 424b, and turbines 426a, 426b. Other features and aspects of the environmental control system 400 are omitted for simplicity. As shown, ram air Aᵣₐₘ and bleed air A_{bleed} can enter the environmental control system 400 and ram exhaust air A_{ram_exhaust} and conditioned cabin air A_{cabin} can exit the environmental control system 400. Further, in some embodiments, a portion of the air within the environmental control system 400 can be exhausted overboard as overboard air Aₒᵥₑᵣ, as illustrated in FIGS. 4A-4C.

The environmental control system 400 can include multiple components to control airflow through the environmental control system 400 such that different flow paths of air within the environmental control system 400 can be achieved based on different operating states. For example, as noted above, a ground operation is indicated in FIG. 4B and a cruise operation is indicated in FIG. 4C.

The environmental control system 400 can include multiple valves, sensors, etc. For example, as shown, in addition to an air cycle machine isolation valve 432, the environmental control system 400 includes one or more overboard diverter valves 434 that can be configured downstream from the turbines 426a, 426b. One or more temperature control valves 436 can be used to control the turbine outlet temperature using bleed air A_{bleed}. The overboard diverter valves 434 are used to either direct flow to the condenser heat exchanger 416 or overboard during cruise operation (Aₒᵥₑᵣ).

A first altitude diverter valve 438 can be configured to divert air from an outlet HXₒᵤₜ of the primary heat exchanger 408a to an inlet HXᵢₙ of the secondary heat exchanger 408b, as shown or allow for air to flow from the outlet HXₒᵤₜ of the primary heat exchanger 408a toward the condenser heat exchanger 416 or to be cabin air A_{cabin}. The first altitude diverter valve 438 is configured to enable the heat exchangers 408a, 408b to operate in series or in parallel. As second altitude diverter valve 440 can be configured to control air from one or both of the heat exchangers 408a, 408b and direct it to the cabin as cabin air A_{cabin} or into the condenser heat exchanger 416. A differential pressure sensor 442 can be configured to monitor a differential air pressure between the cabin air A_{cabin} and air supplied from one or more of the turbines 426a, 426b to the condenser heat exchanger 416. The differential pressure sensor 442 can be used, in some embodiments, to aid in control of one or more of the valves of the environmental control system 400 (e.g., the valves described herein or other valves configured within the environmental control system 400).

Additional valves can be configured to control airflow between the heat exchangers 408a, 408b and the compressors 424a, 424b. For example, a quench valve 444 can be configured to control airflow from an outlet HXₒᵤₜ of the primary heat exchanger 408a to the compressors 424a, 424b. Further, an altitude valve 446 can be configured to control an airflow from the compressors 424a, 424b to inlets HXᵢₙ of one or both of the heat exchangers 408a, 408b.

As noted, the dashed line in FIG. 4B illustrates a flow path of air through the environmental control system 400 in a ground state of operation. The dashed line in FIG. 4C illustrates a flow path of air through the environmental control system 400 in a cruise state of operation.

As illustrated in FIG. 4B, the first altitude diverter valve 438 is configured to divert air from an outlet HXₒᵤₜ of the primary heat exchanger 408a to an inlet HXᵢₙ of the secondary heat exchanger 408b. As such, air from the primary heat exchanger 408a is not directed toward the condenser heat exchanger 416. However, air from the secondary heat exchanger 408b is directed through the second altitude diverter valve 440 and supplied to the condenser heat exchanger 416. Further, the altitude valve 446 is configured to prevent air from the compressors 424a, 424b to be provided to the secondary heat exchanger 408b, as shown. The condenser heat exchanger 416 is configured to supply the cabin air A_{cabin} and also provide air to the water collector 429.

Referring now to FIG. 4C, the changes from the ground state of operation (FIG. 4B) to the cruise state of operation of the environmental control system 400 will be discussed. In the cruise state of operation, first altitude diverter valve 438 is oriented to allow airflow from the primary heat exchanger 408a to flow toward the condenser heat exchanger 416 (rather than being diverted to the secondary heat exchanger 408b). Further, as shown, the second altitude diverter valve 440 is oriented to bypass the condenser heat exchanger 416 and supply air directly as the cabin air A_{cabin}. Because the condenser heat exchanger 416 is bypassed, no air is supplied from the condenser heat exchanger 416 to the water collector 429. However, air can be supplied from a cabin as controlled by an outflow valve 448, through the water collector 429, through the turbines 426a, 426b and then exhausted as overboard air Aₒᵥₑᵣ. Further, in the cruise state of operation, the altitude valve 446 can be opened to enable flow from the compressors 424a, 424b to the secondary heat exchanger 408b, as shown.

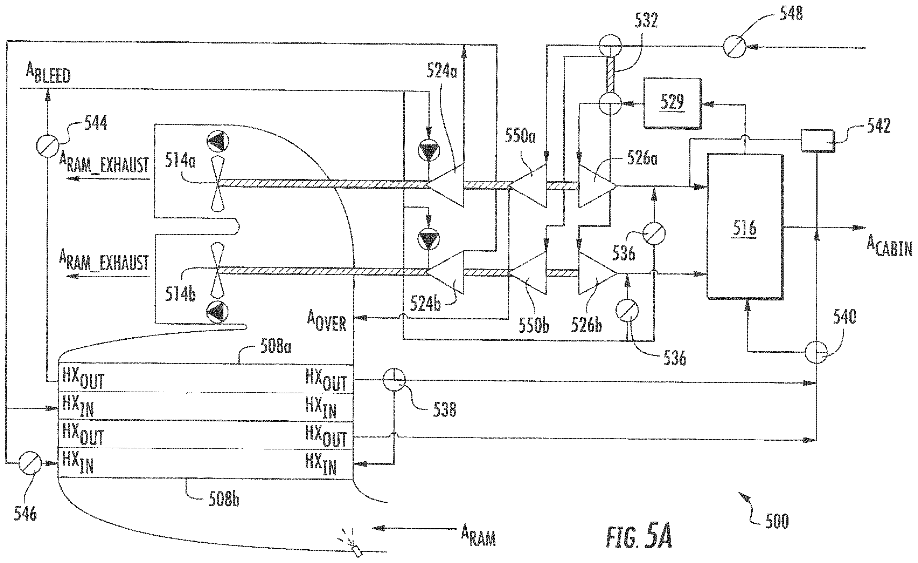

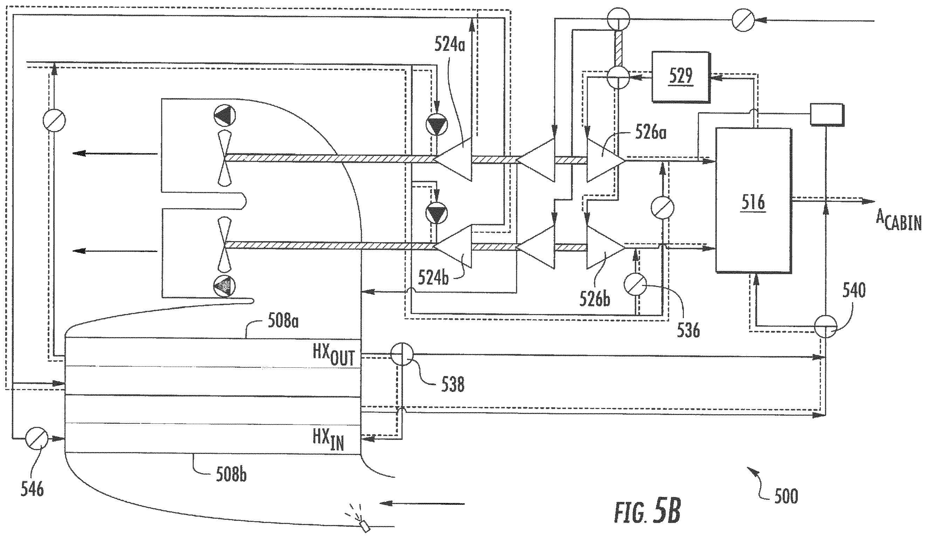

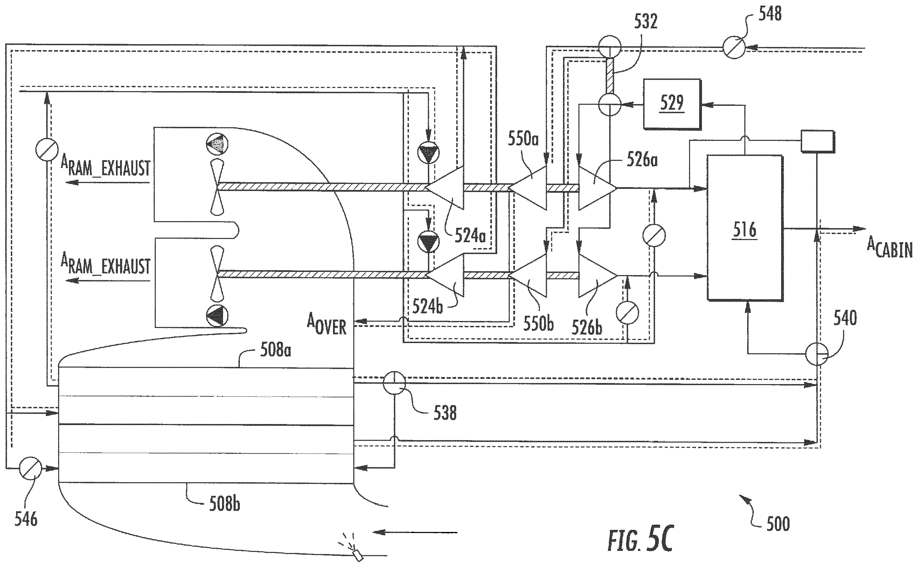

Turning now to FIGS. 5A-5C, an alternative architecture of an environmental control system in accordance with an embodiment of the present disclosure is shown. FIG. 5A is schematic diagram of a pack-and-a-half architecture of an environmental control system 500. FIG. 5A illustrates the components of the environmental control system 500, FIG. 5B illustrates a ground operation of the environmental control system 500, and FIG. 5C illustrates a cruise operation of the environmental control system 500. The dashed lines in FIGS. 5B-5C illustrate flow paths of air as it flows through the environmental control system 500 in the various operational conditions.

The environmental control system 500 can be configured similar to that shown in FIGS. 2A-2B and/or FIGS. 4A-4C, and includes a first heat exchanger 508a, a second heat exchanger 508b, a water collector 529, a condenser heat exchanger 516, and air cycle machines having ram fans 514a, 514b, compressors 524a, 524b, and turbines 526a, 526b. Further, the environmental control system 500 (and particularly the air cycle machines of the environmental control system 500) include power turbines 550a, 550b. Other features and aspects of the environmental control system 500 are omitted for simplicity. As shown, ram air Aᵣₐₘ and bleed air A_{bleed} can enter the environmental control system 500 and ram exhaust air A_{ram_exhaust} and conditioned cabin air A_{cabin} can exit the environmental control system 500. Further, in some embodiments, a portion of the air within the environmental control system 500 can be exhausted overboard as overboard air Aₒᵥₑᵣ, as illustrated in FIGS. 5A and 5C.

The environmental control system 500 can include multiple components to control airflow through the environmental control system 500 such that different flow paths of air within the environmental control system 500 can be achieved based on different operating states. For example, as noted above, a ground operation is indicated in FIG. 5B and a cruise operation is indicated in FIG. 5C.

The environmental control system 500 can include multiple valves, sensors, etc. As shown in FIG. 5A, the air cycle machine isolation valve 532 is configured to control air flow to the turbines 526a, 526b or the power turbines 550a, 550b. During operation, the turbines 526a, 526b can be supplied with air from the water collected 529, or the power turbines 550a, 550b can be supplied with air from a cabin as controlled an outflow valve 548, depending on the state of the air cycle machine isolation valve 532. One or more temperature control valves 536 can be used to divert bleed air A_{bleed} to the condenser heat exchanger 516.

A first altitude diverter valve 538 can be configured to divert air from an outlet HXₒᵤₜ of the primary heat exchanger 508a to an inlet HXᵢₙ of the secondary heat exchanger 508b, as shown or allow for air to flow from the outlet HXₒᵤₜ of the primary heat exchanger 508a toward the condenser heat exchanger 516 or to be cabin air A_{cabin}. The first altitude diverter valve 538 is configured to enable the heat exchangers 508a, 508b to operate in series or in parallel. As second altitude diverter valve 540 can be configured to control air from one or both of the heat exchangers 508a, 508b and direct it to the cabin as cabin air A_{cabin} or into the condenser heat exchanger 516. A differential pressure sensor 542 can be configured to monitor a differential air pressure between the cabin air A_{cabin} and air supplied from one or more of the turbines 526a, 526b to the condenser heat exchanger 516. The differential pressure sensor 542 can be used, in some embodiments, to aid in control of one or more of the valves of the environmental control system 500 (e.g., the valves described herein or other valves configured within the environmental control system 500).

Additional valves can be configured to control airflow between the heat exchangers 508a, 508b and the compressors 524a, 524b. For example, a quench valve 544 can be configured to control airflow from an outlet HXₒᵤₜ of the primary heat exchanger 508a to the compressors 524a, 524b. Further, an altitude valve 546 can be configured to control an airflow from the compressors 524a, 524b to inlets HXᵢₙ of one or both of the heat exchangers 508a, 508b.

As noted, the dashed lines in FIG. 5B illustrate a flow path of air through the environmental control system 500 in a ground state of operation. The dashed lines in FIG. 5C illustrates a flow path of air through the environmental control system 500 in a cruise state of operation.

As illustrated in FIG. 5B, the first altitude diverter valve 538 is configured to divert air from an outlet HXₒᵤₜ of the primary heat exchanger 508a to an inlet HXᵢₙ of the secondary heat exchanger 508b. As such, air from the primary heat exchanger 508a is not directed toward the condenser heat exchanger 516. However, air from the secondary heat exchanger 508b is directed through the second altitude diverter valve 540 and supplied to the condenser heat exchanger 516. Further, the altitude valve 546 is configured to prevent air from the compressors 524a, 524b to be provided to the secondary heat exchanger 508b, as shown. The condenser heat exchanger 516 is configured to supply the cabin air A_{cabin} and also provide air to the water collector 529.

Referring now to FIG. 5C, the changes from the ground state of operation (FIG. 5B) to the cruise state of operation of the environmental control system 500 will be discussed. In the cruise state of operation, first altitude diverter valve 538 is oriented to allow airflow from the primary heat exchanger 508a to flow toward the condenser heat exchanger 516 (rather than being diverted to the secondary heat exchanger 508b). Further, as shown, the second altitude diverter valve 540 is oriented to bypass the condenser heat exchanger 516 and supply air directly as the cabin air A_{cabin}. Because the condenser heat exchanger 516 is bypassed, no air is supplied from the condenser heat exchanger 516 to the water collector 529. However, air can be supplied from the outflow valve 548 and bypass the water collector 529 by operation of the air cycle machine isolation valve 532. The air can also be diverted away from the turbines 526a, 526b and instead conveyed to the power turbines 550a, 550b and subsequently diverted to the ram out as ram exhaust air A_{ram_exhaust}. Further, in the cruise state of operation, the altitude valve 546 can be opened to enable flow from the compressors 524a, 524b to the secondary heat exchanger 508b, as shown.

Advantageously, embodiments described herein provide improved pack-and-a-half environmental control systems. For example, advantageously, embodiments provided herein enable redundancy where needed for dispatch reliability (e.g., air cycle machine and temperature control valve). Further, advantageously, the use of a two-pass ram heat exchanger operating in series on the ground (e.g., FIGS. 4A, 5A) and in parallel in flight (e.g., FIGS. 4B, 5B) by operation of an altitude diverter valve can enable low pack impedance. Such parallel or series operation of the dual heat exchanger arrangement can enable lower bleed pressure during flight (e.g., cruise) that can result in a fuel savings benefit.

Further, advantageously, in some embodiments, the air cycle machines can utilize mixed-flow compressors (e.g., bleed air, heat exchanger air, etc.) offering a wide range of performance over a system operating profile. Such performance range can enable relatively low supply pressures from an aircraft engine to be efficiently boosted in-flight to pressurize the cabin.

In various embodiments, the turbines of the air cycle machines can be used as a cooling turbine for ground operation and a power turbine (driven by outflow air from a cabin) in flight. A common turbine (e.g., FIG. 4A) or separate turbines (e.g., FIG. 5A) may be used.

In various embodiments, a quench valve can be provided to supply cool air to a compressor inlet when bleed inlet air temperatures need to be tempered to a level to permit the use of lightweight materials (e.g., aluminum) in the system.

The various altitude valves and altitude diverter valves are used reconfigure the pack-and-a-half system architecture for low impedance (e.g., a fuel saving mode). Further, in some embodiments, an outflow valve can control an airflow from a cabin to the turbines (e.g., common turbines, FIG. 4A) or the power turbines (e.g., separate turbines, FIG. 5A). The temperature control valves of various embodiments can be configured to regulate turbine outlet temperatures.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to normal operational attitude and should not be considered otherwise limiting.

While the present disclosure has been described in detail in connection with only a limited number of embodiments, it should be readily understood that the present disclosure is not limited to such disclosed embodiments. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. An environmental control system (200, 300, 400, 500) for an aircraft, the environmental control system comprising:
a ram module (202, 302) having a primary heat exchanger (208a, 308a, 408a, 508a) and a secondary heat exchanger (208b, 308b, 408b, 508b);
a refrigeration module (204, 304) having an air cycle machine module (328) and a condenser heat exchanger (216, 316, 416, 516);
an air cycle machine module (218,318); and
a first altitude diverter valve (438, 538) wherein the environmental control system (200,300,400,500) is configured to operate the primary and secondary heat exchangers in serie when the first altitude diverter valve (438,538) is in a first position and to operate the primary and secondary heat exchangers in parallel when the first altitude diverter valve (438,538) is in a second position,
wherein the environmental control system (200,300,400,500) is further configured such that air from the primary and secondary heat exchangers is provided to (i) the condenser heat exchanger (216, 316, 416, 516) when the primary and secondary heat exchangers operate in series and (ii) an aircraft cabin when the primary and secondary heat exchangers operate in parallel, and **characterized by** the environmental control system (200,300,400,500) comprises a bleed air supply for supplying bleed air to the air cycle machine module (218,318) and further comprising a quench valve (444, 544) for controling the flow from the primary heat exchanger such that air from the primary heat exchange can be provided to supply cool air to the bleed air supply and condition the bleed air flowing through the bleed air supply.

2. The environmental control system of claim 1, wherein the environmental control system (200,300,400,500) is configured to operate the primary and secondary heat exchangers (208a, 308a, 408a, 508a, 208b, 308b, 408b, 508b) in series when the aircraft is on the ground.

3. The environmental control system of claim 1, wherein the environmental control system (200,300,400,500) is configured to operate the primary and secondary heat exchangers (208a, 308a, 408a, 508a, 208b, 308b, 408b, 508b) in parallel when the aircraft is in flight.

4. The environmental control system of any of the preceding claims, further comprising a second altitude diverter valve, the environmental control system (200,300,400,500) being configured to operate the said second altitude diverter valve
to direct air from the primary and secondary heat exchangers (208a, 308a, 408a, 508a, 208b, 308b, 408b, 508b) to one of the condenser heat exchanger (216, 316, 416, 516) and the aircraft cabin.

5. The environmental control system of any of the preceding claims, wherein the air cycle machine module (328) comprises a first air cycle machine and a second air cycle machine, each air cycle machine having a respective compressor and respective turbine.

6. The environmental control system of any of the preceding claims, further comprising a water collector (329, 429, 529) configured downstream from the condenser heat exchanger, the environmental control system (200,300,400,500) is configured to operate the water collector (329, 429, 529) to extract water from air supplied from one of the condenser heat exchanger (216, 316, 416, 516) or outflow air from the aircraft cabin.

7. The environmental control system of any of the preceding claims, wherein the air cycle machine module (328) comprises a first air cycle machine and a second air cycle machine, each air cycle machine having a respective compressor, respective turbine, and respective power turbine.

8. The environmental control system of claim 7, wherein the environmental control system (200,300,400,500) is configured to operate the turbines of the first and second air cycle machines when the aircraft is on the ground and the power turbines of the first and second air cycle machines when the aircraft is in flight.

9. The environmental control system of any of claims 7-8, further comprising a water collector (329, 429, 529) configured downstream from the condenser heat exchanger (216, 316, 416, 516), the environmental control system (200,300,400,500) is configured to operate the water collector (329, 429, 529) to extract water from air supplied from the condenser heat exchanger (329, 429, 529) when the turbines of the first and second air cycle machines are operated and to bypass the water collector (329, 429, 529) when the power turbines of the first and second air cycle machines are operated.

10. The environmental control system of any of the preceding claims, further comprising at least one overboard diverter valve, the environmental control system (200,300,400,500) is configured to operate the at least one overboard diverter valve to exhaust air from the air cycle machine module (328) overboard when the aircraft is in flight.

11. The environmental control system of any of the preceding claims, further comprising at least one temperature control valve (436, 536) the environmental control system (200,300,400,500) is configured to operate the at least one temperature control valve to divert bleed air to the condenser heat exchanger (216, 316, 416, 516) when the aircraft is on the ground.

12. The environmental control system of any of the preceding claims, further comprising an altitude valve (446, 546) the environmental control system (200,300,400,500) is configured to operate the altitude valve to control an airflow from the air cycle machine module to one or both of the heat exchangers of the ram module.

## Patentansprüche

1. Umweltkontrollsystem (200, 300, 400, 500) für ein Luftfahrzeug, wobei das Umweltkontrollsystem Folgendes umfasst:
ein Stauluftmodul (202, 302), das einen primären Wärmetauscher (208a, 308a, 408a, 508a) und einen sekundären Wärmetauscher (208b, 308b, 408b, 508b) umfasst;
ein Kühlungsmodul (204, 304), das ein Kühlturbinenmodul (328) und einen Kondensatorwärmetauscher (216, 316, 416, 516) aufweist;
ein Kühlturbinenmodul (218, 318); und
ein erstes Höhenumleitventil (438, 538), wobei das Umweltkontrollsystem (200, 300, 400, 500) konfiguriert ist, um den primären und den sekundären Wärmetauscher in Reihe zu betreiben, wenn das erste Höhenumleitventil (438, 538) sich in einer ersten Position befindet, und den primären und den sekundären Wärmetauscher parallel zu betreiben, wenn das erste Höhenumleitventil (438, 538) sich in einer zweiten Position befindet,
wobei das Umweltkontrollsystem (200, 300, 400, 500) weiter so konfiguriert ist, dass Luft aus dem primären und dem sekundären Wärmetauscher (i) zum Kondensatorwärmetauscher (216, 316, 416, 516) geliefert wird, wenn der primäre und der sekundäre Wärmetauscher in Reihe arbeiten, und (ii) zu einer Luftfahrzeugkabine geliefert wird, wenn der primäre und der sekundäre Wärmetauscher parallel arbeiten, und
**dadurch gekennzeichnet, dass** das Umweltkontrollsystem (200, 300, 400, 500) eine Zapfluftversorgung zur Lieferung von Zapfluft an das Kühlturbinenmodul (218, 318) umfasst,
und weiter umfassend ein Quenchventil (444, 544) zum Steuern des Stroms vom primären Wärmetauscher, so dass Luft aus dem primären Wärmetauscher vorgesehen werden kann, um kühle Luft zur Zapfluftversorgung zu liefern und die Zapfluft, die durch die Zapfluftversorgung strömt, zu konditionieren.

2. Umweltkontrollsystem nach Anspruch 1, wobei das Umweltkontrollsystem (200, 300, 400, 500) konfiguriert ist, um den primären und den sekundären Wärmetauscher (208a, 308a, 408a, 508a, 208b, 308b, 408b, 508b) in Reihe zu betreiben, wenn sich das Luftfahrzeug am Boden befindet.

3. Umweltkontrollsystem nach Anspruch 1, wobei das Umweltkontrollsystem (200, 300, 400, 500) konfiguriert ist, um den primären und den sekundären Wärmetauscher (208a, 308a, 408a, 508a, 208b, 308b, 408b, 508b) parallel zu betreiben, wenn sich das Luftfahrzeug im Flug befindet.

4. Umweltkontrollsystem nach einem der vorstehenden Ansprüche, weiter umfassend ein zweites Höhenumleitventil, wobei das Umweltkontrollsystem (200, 300, 400, 500) konfiguriert ist, um das zweite Höhenumleitventil so zu betreiben, dass es Luft von dem primären und von dem sekundären Wärmetauscher (208a, 308a, 408a, 508a, 208b, 308b, 408b, 508b) zu einem aus dem Kondensatorwärmetauscher (216, 316, 416, 516) und der Luftfahrzeugkabine lenkt.

5. Umweltkontrollsystem nach einem der vorstehenden Ansprüche, wobei das Kühlturbinenmodul (328) eine erste Kühlturbine und eine zweite Kühlturbine umfasst, wobei jede Kühlturbine einen entsprechenden Verdichter und eine entsprechende Turbine umfasst.

6. Umweltkontrollsystem nach einem der vorstehenden Ansprüche, weiter umfassend einen Wassersammler (329, 429, 529), der dem Kondensatorwärmetauscher nachgeschaltet konfiguriert ist, wobei das Umweltkontrollsystem (200, 300, 400, 500) konfiguriert ist, um den Wassersammler (329, 429, 529) so zu betreiben, dass er Wasser aus der Luft extrahiert, die von einem aus dem Kondensatorwärmetauscher (216, 316, 416, 516) oder aus der Ausströmluft aus der Luftfahrzeugkabine geliefert wird.

7. Umweltkontrollsystem nach einem der vorstehenden Ansprüche, wobei das Kühlturbinenmodul (328) eine erste Kühlturbine und eine zweite Kühlturbine umfasst, wobei jede Kühlturbine einen entsprechenden Verdichter, eine entsprechende Turbine und eine entsprechende Arbeitsturbine aufweist.

8. Umweltkontrollsystem nach Anspruch 7, wobei das Umweltkontrollsystem (200, 300, 400, 500) konfiguriert ist, um die Turbinen aus der ersten und der zweiten Kühlturbine zu betreiben, wenn sich das Luftfahrzeug am Boden befindet, und die Arbeitsturbinen aus der ersten und der zweiten Kühlturbine zu betreiben, wenn sich das Luftfahrzeug im Flug befindet.

9. Umweltkontrollsystem nach einem der Ansprüche 7-8, weiter umfassend einen Wassersammler, (329, 429, 529), der dem Kondensatorwärmetauscher (216, 316, 416, 516) nachgeschaltet konfiguriert ist, wobei das Umweltkontrollsystem (200, 300, 400, 500) so konfiguriert ist, um den Wassersammler (329, 429, 529) zu betreiben, so dass er Wasser aus der Luft extrahiert, die vom Kondensatorwärmetauscher (329, 429, 529) bereitgestellt wird, wenn die Turbinen der ersten und der zweiten Kühlturbine betrieben werden, und den Wassersammler (329, 429, 529) zu umgehen, wenn die Arbeitsturbinen der ersten und der zweiten Kühlturbine betrieben werden.

10. Umweltkontrollsystem nach einem der vorstehenden Ansprüche, weiter umfassend mindestens ein Überbordumleitventil, wobei das Umweltkontrollsystem (200, 300, 400, 500) konfiguriert ist, um das mindestens eine Überbordumleitventil so zu betreiben, dass es Luft aus dem Kühlturbinenmodul (328) über Bord ablässt, wenn sich das Luftfahrzeug im Flug befindet.

11. Umweltkontrollsystem nach einem der vorstehenden Ansprüche, weiter umfassend mindestens ein Temperaturregelventil (436, 536), wobei das Umweltkontrollsystem (200, 300, 400, 500) konfiguriert ist, um das mindestens eine Temperaturregelventil so zu betreiben, dass es Zapfluft zum Kondensatorwärmetauscher (216, 316, 416, 516) umleitet, wenn sich das Luftfahrzeug am Boden befindet.

12. Umweltkontrollsystem nach einem der vorstehenden Ansprüche, weiter umfassend ein Höhenventil (446, 546), wobei das Umweltkontrollsystem (200, 300, 400, 500) konfiguriert ist, um das Höhenventil so zu betreiben, dass es einen Luftstrom vom Kühlturbinenmodul zu einem oder beiden Wärmetauschern des Stauluftmoduls regelt.

## Revendications

1. Système de régulation de l'environnement (200, 300, 400, 500) pour un aéronef, le système de régulation de l'environnement comprenant :
un module ram (202, 302) présentant un échangeur de chaleur primaire (208a, 308a, 408a, 508a) et un échangeur de chaleur secondaire (208b, 308b, 408b, 508b) ;
un module de réfrigération (204, 304) présentant un module de machine à circulation d'air (328) et un échangeur de chaleur de condenseur (216, 316, 416, 516) ;
un module de machine à circulation d'air (218, 318) ; et
une première vanne de dérivation d'altitude (438, 538) dans lequel le système de régulation de l'environnement (200, 300, 400, 500) est configuré pour actionner les échangeurs de chaleur primaire et secondaire en série lorsque la première vanne de dérivation d'altitude (438, 538) est dans une première position et pour actionner les échangeurs de chaleur primaire et secondaire en parallèle lorsque la première vanne de dérivation d'altitude (438, 538) est dans une seconde position,
dans lequel le système de régulation de l'environnement (200, 300, 400, 500) est en outre configuré de sorte que de l'air des échangeurs de chaleur primaire et secondaire soit fourni à (i) l'échangeur de chaleur de condenseur (216, 316, 416, 516) lorsque les échangeurs de chaleur primaire et secondaire fonctionnent en série et (ii) une cabine d'aéronef lorsque les échangeurs de chaleur primaire et secondaire fonctionnent en parallèle, et **caractérisé en ce que** le système de régulation de l'environnement (200, 300, 400, 500) comprend une alimentation d'air de prélèvement pour l'alimentation en air de prélèvement du module de machine à circulation d'air (218, 318) et comprenant en outre une vanne de trempe (444, 544) pour la commande du flux de l'échangeur de chaleur primaire de sorte que de l'air de l'échange de chaleur primaire puisse être fourni pour alimenter en air froid l'alimentation en air de prélèvement et conditionner l'air de prélèvement s'écoulant au travers de l'alimentation en air de prélèvement.

2. Système de régulation de l'environnement selon la revendication 1, dans lequel le système de régulation de l'environnement (200, 300, 400, 500) est configuré pour actionner les échangeurs de chaleur (208a, 308a, 408a, 508a, 208b, 308b, 408b, 508b) primaire et secondaire en série lorsque l'aéronef est sur le sol.

3. Système de régulation de l'environnement selon la revendication 1, dans lequel le système de régulation de l'environnement (200, 300, 400, 500) est configuré pour actionner les échangeurs de chaleur (208a, 308a, 408a, 508a, 208b, 308b, 408b, 508b) primaire et secondaire en parallèle lorsque l'aéronef est en vol.

4. Système de régulation de l'environnement selon l'une quelconque des revendications précédentes, comprenant en outre une seconde vanne de dérivation d'altitude, le système de régulation de l'environnement (200, 300, 400, 500) étant configuré pour actionner ladite seconde vanne de dérivation d'altitude afin de diriger de l'air des échangeurs de chaleur (208a, 308a, 408a, 508a, 208b, 308b, 408b, 508b) primaire et secondaire vers un parmi l'échangeur de chaleur de condenseur (216, 316, 416, 516) et la cabine d'aéronef.

5. Système de régulation de l'environnement selon l'une quelconque des revendications précédentes, dans lequel le module de machine à circulation d'air (328) comprend une première machine à circulation d'air et une seconde machine à circulation d'air, chaque machine à circulation d'air présentant un compresseur respectif et une turbine respective.

6. Système de régulation de l'environnement selon l'une quelconque des revendications précédentes, comprenant en outre un collecteur d'eau (329, 429, 529) configuré en aval de l'échangeur de chaleur de condenseur, le système de régulation de l'environnement (200, 300, 400, 500) est configuré pour actionner le collecteur d'eau (329, 429, 529) afin d'extraire de l'eau de l'air fourni par un de l'échangeur de chaleur de condenseur (216, 316, 416, 516) ou faire sortir de l'air de la cabine d'aéronef.

7. Système de régulation de l'environnement selon l'une quelconque des revendications précédentes, dans lequel le module de machine à circulation d'air (328) comprend une première machine à circulation d'air et une seconde machine à circulation d'air, chaque machine à circulation d'air présentant un compresseur respectif, une turbine respective, et une turbine de puissance respective.

8. Système de régulation de l'environnement selon la revendication 7, dans lequel le système de régulation de l'environnement (200, 300, 400, 500) est configuré pour actionner les turbines des première et seconde machines à circulation d'air lorsque l'aéronef est sur le sol et les turbines de puissance des première et seconde machines à circulation d'air lorsque l'aéronef est en vol.

9. Système de régulation de l'environnement selon l'une quelconque des revendications 7 à 8, comprenant en outre un collecteur d'eau (329, 429, 529) configuré en aval de l'échangeur de chaleur de condenseur (216, 316, 416, 516), le système de régulation de l'environnement (200, 300, 400, 500) est configuré pour actionner le collecteur d'eau (329, 429, 529) afin d'extraire de l'eau de l'air fourni par l'échangeur de chaleur de condenseur (329, 429, 529) lorsque les turbines des première et seconde machines à circulation d'air sont actionnées et pour dériver le collecteur d'eau (329, 429, 529) lorsque les turbines de puissance des première et seconde machines à circulation d'air sont actionnées.

10. Système de régulation de l'environnement selon l'une quelconque des revendications précédentes, comprenant en outre au moins une vanne de dérivation vers l'extérieur, le système de régulation de l'environnement (200, 300, 400, 500) est configuré pour actionner l'au moins une vanne de dérivation vers l'extérieur pour faire échapper de l'air du module de machine à circulation d'air (328) vers l'extérieur lorsque l'aéronef est en vol.

11. Système de régulation de l'environnement selon l'une quelconque des revendications précédentes, comprenant en outre au moins une vanne de commande de température (436, 536), le système de régulation de l'environnement (200, 300, 400, 500) est configuré pour actionner l'au moins une vanne de commande de température afin de dévier de l'air de prélèvement vers l'échangeur de chaleur de condenseur (216, 316, 416, 516) lorsque l'aéronef est sur le sol.

12. Système de régulation de l'environnement selon l'une quelconque des revendications précédentes, comprenant en outre une vanne d'altitude (446, 546), le système de régulation de l'environnement (200, 300, 400, 500) est configuré pour actionner la vanne d'altitude afin de commander un flux d'air du module de machine à circulation d'air vers un ou les deux des échangeurs de chaleur du module ram.
